# EUROPEAN PATENT APPLICATION

(11) **EP 4 811 489 A1**
(43) Date of publication of application: **23.09.2026**
(21) Application number: 24919684.1
(22) Date of filing: 14.08.2024
(51) Int. Cl.: H01M 10/0587, B26D 1/06

(54) **CUTTING APPARATUS FOR COMPOSITE ELECTRODE SHEETS AND BATTERY PRODUCTION LINE**

(30) Priority: 26.01.2024 CN 202410116363
(71) Applicant: Contemporary Amperex Technology Co., Limited, Ningde, Fujian 352100 (CN)
(72) Inventor: LI, Zhibin, Ningde, Fujian 352100 (CN); LUO, Zhongping, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN)
(74) Representative: Ziebig Hengelhaupt Intellectual Property Attorneys Patentanwaltskanzlei PartGmbB
(86) International application number: PCT/CN2024/112014
(87) International publication number: WO 2025/156602

(57) **Abstract**

A cutting apparatus for composite electrode sheets and a battery production line, belonging to the technical field of processing apparatuses. The cutting apparatus for composite electrode sheets comprises: a rack; a compounding mechanism, which is mounted on the rack and is configured to cooperate with an adsorption mechanism to compound a separator and an electrode sheet to obtain a composite electrode sheet; the adsorption mechanism, which is mounted on the rack and is configured to adsorb the composite electrode sheet; and a cutting mechanism, which is mounted on the rack and is configured to cooperate with the adsorption mechanism to cut off the composite electrode sheet.

## Description

### CROSS-REFERENCE TO RELATED APPLICATIONS

The present application is based upon and claims priority to Chinese Patent Application No. 202410116363.5 filed on January 26, 2024, which is incorporated by reference in its entirety.

### TECHNICAL FIELD

The present application relates to the field of processing devices, and in particular, to a cutting device for a composite electrode plate and a battery production line.

### BACKGROUND

In related arts, battery cells of batteries consist of electrode plates and separators. When processing battery cells, it is necessary to use a composite device to composite electrode plates and separators to form composite electrode plates, and then use a cutting device to cut off the composite electrode plates. This process is complex, and requires the addition of a traction mechanism for the composite electrode plates between the two devices. Furthermore, the current composite device and cutting device are relatively large in volume, occupy a lot of space, and have a large number of parts, thereby resulting in high production costs.

### SUMMARY OF THE INVENTION

The present application provides a cutting device for a composite electrode plate and a battery production line to simultaneously achieve both composite and cutting functions without the need to transfer the composite electrode plate, thereby improving production efficiency. The cutting device has a simple structure, and an integrated composite mechanism, adsorption mechanism, and cutting mechanism can reduce the number of parts, thereby reducing the overall volume of the cutting device and lowering production costs.

In a first aspect, an embodiment of the present application provides a cutting device for a composite electrode plate, including:
a rack;
a composite mechanism mounted on the rack and configured to cooperate with an adsorption mechanism to composite a separator and an electrode plate to obtain a composite electrode plate;
the adsorption mechanism mounted on the rack and configured to adsorb the composite electrode plate; and
a cutting mechanism mounted on the rack and configured to cooperate with the adsorption mechanism to cut off the composite electrode plate.

By integrating the compositing mechanism, the adsorption mechanism, and the cutting mechanism onto the same rack, the cutting device for a composite electrode plate provided according to the embodiment of the present application can simultaneously achieve both composite and cutting functions without the need to transfer the composite electrode plate, thereby improving production efficiency. The cutting device has a simple structure, and the integrated composite mechanism, adsorption mechanism, and cutting mechanism can reduce the number of parts, thereby reducing the overall volume of the cutting device and lowering production costs.

In the above technical solution, the composite mechanism and the cutting mechanism are respectively located on two opposite sides of the adsorption mechanism.

In the above technical solution, the adsorption mechanism includes:
a vacuum roller, the vacuum roller being rotatably mounted on the rack.

In the above technical solution, the vacuum roller includes:
a first transmission shaft, the first transmission shaft being rotatably mounted on the rack;
a sleeve, the sleeve being mounted on the first transmission shaft, and the sleeve forming a negative pressure chamber and being provided with a through hole in communication with the negative pressure chamber; and
a baffle, the baffle being mounted on the first transmission shaft and located at an end portion of the sleeve.

In the above technical solution, the baffle is provided with a vacuum-breaking hole that is respectively in communication with the negative pressure chamber and the external environment.

In the above technical solution, one end of the baffle facing away from the sleeve is provided with an inwardly recessed groove, and the vacuum-breaking hole is provided on a bottom wall of the groove.

In the above technical solution, an angle α of a region where the vacuum-breaking hole is in communication with the negative pressure chamber in a circumferential direction meets: 30°≤α≤80°.

In the above technical solution, the sleeve is rotatably connected to the baffle.

In the above technical solution, the composite mechanism includes:
a thermal lamination roller, the thermal lamination roller being pivotally mounted on the rack; and
a first driving mechanism, the first driving mechanism being configured to drive the thermal lamination roller to move toward the adsorption mechanism.

In the above technical solution, the composite mechanism further includes:
a support, the support being pivotally mounted on the rack, the thermal lamination roller being rotatably mounted on the support, with a pivot axis of the support parallel to and spaced apart from a rotation axis of the thermal lamination roller, and the first driving mechanism being connected to the support and configured to drive the support to rotate.

In the above technical solution, the cutting mechanism includes:
a second transmission shaft, the second transmission shaft being rotatably mounted on the rack;
a cutter blade, the cutter blade being mounted on the second transmission shaft; and
a second driving mechanism, the second driving mechanism being connected to the second transmission shaft and configured to drive the second transmission shaft to rotate.

The above technical solution further includes:
a heater, the heater being mounted in the cutter blade.

In the above technical solution, the cutter blade has a working surface and clearance surfaces located on both sides of the working surface. When the cutter blade moves to abut against the composite electrode plate on the composite mechanism, the working surface presses the composite electrode plate tightly.

In the above technical solution, the rack includes two support plates arranged opposite to each other and a support rod connected between the two support plates. The composite mechanism, the adsorption mechanism, and the cutting mechanism are all supported on the support plates.

In a second aspect, the present application provides a battery production line, the battery production line including:
the cutting device for a composite electrode plate according to any one of the above description; and
a conveying device, the conveying device being configured to transport an electrode plate and a separator to the cutting device.

### BRIEF DESCRIPTION OF THE DRAWINGS

To more clearly describe the technical solutions of the embodiments of the present application, the drawings required to be used in the embodiments will be briefly introduced below, and it should be understood that the following drawings only show some embodiments of the present application, and therefore should not be considered as limiting the scope of the present application. For those of ordinary skills in the art, other relevant drawings can also be obtained based on these drawings without creative work.
FIG. 1 is a schematic structural diagram of a cutting device for a composite electrode plate according to some embodiments of the present application;
FIG. 2 is a schematic structural diagram of an adsorption mechanism of a cutting device for a composite electrode plate according to some embodiments of the present application;
FIG. 3 is a schematic structural diagram of a composite mechanism of a cutting device for a composite electrode plate according to some embodiments of the present application;
FIG. 4 is a schematic structural diagram of a cutting mechanism of a cutting device for a composite electrode plate according to some embodiments of the present application;
FIG. 5 is a schematic sectional diagram of an unfolded composite electrode plate according to some embodiments of the present application; and
FIG. 6 is a schematic plan view of an unfolded composite electrode plate according to some embodiments of the present application.

List of reference numerals:
Cutting device 10, Rack 11, Support plate 111, Support rod 112;
Composite mechanism 12, Thermal lamination roller 121, Heating rod 1211, First temperature sensor 1212, Support 122, Third transmission shaft 123;
Adsorption mechanism 13, Vacuum roller 131, Sleeve 1311, Through hole 13111, Baffle 1312, Groove 13121, Vacuum-breaking hole 13122, First transmission shaft 1313;
Cutting mechanism 14, Second transmission shaft 141, Cutter blade 142, Working surface 1421, Clearance surface 1422, Heater 1423, Second temperature sensor 1424;
Composite electrode plate 20, First electrode plate 21, Second electrode plate 22, First separator 23, Second separator 24, Sealing edge 25.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

The term "a plurality of" appear in the present application refers to more than two (including two). Similarly, "a plurality of groups" refers to more than two groups (including two groups), and "a plurality of plates" refers to more than two plates (including two plates).

The battery involved in embodiments of the present application refers to a physical module that includes one or a plurality of battery cells to supply higher voltage and capacity. For example, the battery mentioned in the present application may include a battery module, a battery pack, or the like. The battery generally includes a box for packaging one or more battery cell or a plurality of battery modules. The box can prevent liquid or other foreign matters from affecting charging or discharging of the battery cells.

The battery cell includes a shell, an electrode assembly, and an electrolyte, where the shell is used to accommodate the electrode assembly and the electrolyte. The electrode assembly consists of a positive electrode plate, a negative electrode plate, and a separator film. The battery cell operates mainly relying on movement of metal ions between the positive electrode plate and the negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative tab. The material of the negative electrode current collector may be copper, and the negative electrode active material may be carbon, silicon, etc. In order to ensure that no fusing occurs when a large current passes, there are a plurality of positive tabs which are stacked together, and there are a plurality of negative tabs which are stacked together.

The separator may be of a material such as polypropylene (PP) or polyethylene (PE). In addition, the electrode assembly may have a wound structure or a stacked structure, which is not limited in the embodiments of the present application.

Based on the above, it can be understood that a process of a battery production line producing batteries generally involves manufacturing individual battery cells, connecting a plurality of individual battery cells in series or parallel to form a battery module, and then assembling the battery module with a box body and other structures to form a battery. A process of manufacturing battery cells using a battery production device generally includes a front-end process, a mid-end process, and a back-end process. The front-end process is used to manufacture to obtain a positive electrode plate and a negative electrode plate, and main processes involved include stirring, coating, slitting, and the like. The middle-end process is used to complete forming of battery cells, and main processes involved include winding (or stacking), pre-pressing, assembling, liquid injection, sealing, and the like. The back-end process is used to activate the formed battery cells, and main processes involved include standing, formation, capacity testing, packaging, inspection, and the like.

In the above process, each step is completed by a corresponding device. For example, slitting is completed by a cutting device. Some steps are also connected by a conveying device to realize transfer of materials. For example, a conveying device is arranged upstream of the cutting device to transport the electrode plate and separator to the cutting device.

In recent years, new energy vehicles have made a leap forward in development. In the field of electric vehicles, power batteries, as power sources of electric vehicles, play an irreplaceable and important role. The battery consists of a box body and a plurality of battery cells accommodated within the box body. The batteries, as core components of new-energy vehicles, have high requirements in terms of both security and cyclic service life.

The cutting device for a composite electrode plate disclosed in embodiments of the present application can be applied to a battery production line, and the battery production line is used to produce and manufacture batteries. It is understandable that the battery may be used as a power source of an electrical apparatus such as a mobile phone, a tablet, a laptop, a battery vehicle, an electric toy, and an electric tool, for providing electric energy for the electrical apparatus. Specifically, the battery may include a box body and battery cells accommodated within the box body. The battery cell is the smallest unit of a battery and is capable of realizing conversion between electrical energy and chemical energy. Here, the battery cell shall be understood in a broad sense. That is, the battery cell may be a secondary battery or a primary battery, and may also be a lithium-sulfur battery cell, a sodium-ion battery cell, or a magnesium-ion battery cell, but is not limited thereto. The battery cell may be in a cylindrical shape, a cuboid shape, or another shapes.

The inventors find that in related technologies, battery cells of batteries consist of electrode plates and separators. When processing battery cells, it is necessary to use a composite device to combine electrode plates and separators to form composite electrode plates, and then use a cutting device to cut off the composite electrode plates. This process is complex, requiring the addition of a traction mechanism for the composite electrode plates between the two devices. Furthermore, the current composite device and cutting device are relatively large in volume, occupying a lot of space and having a large number of parts, resulting in high production costs.

Based on the above considerations, in order to solve the problems of large size and high production cost of composite device and cutting device, the inventors, after in-depth research, design a cutting device for a composite electrode plate, including a rack, a composite mechanism, an adsorption mechanism, and a cutting mechanism. The composite mechanism is mounted on the rack and is configured to cooperate with the adsorption mechanism to composite a separator and an electrode plate to obtain a composite electrode plate. The adsorption mechanism is mounted on the rack and is configured to adsorb the composite electrode plate. The cutting mechanism is mounted on the rack and is configured to cooperate with the adsorption mechanism to cut off the composite electrode plate.

In this type of cutting device for a composite electrode plate, by integrating the composite mechanism and the cutting mechanism into a structure on a rack, this structure allows for performing a subsequent cutting operation on a composite electrode plate on the adsorption mechanism after the electrode plate and separator are composited into the composite electrode plate on the adsorption mechanism using the composite mechanism. The overall device is simple in structure, reducing the number of device parts for compositing and cutting the electrode plate and the separator, thereby reducing the space occupied by the cutting device and lowering production costs.

The cutting device is used in a battery production line. Separators and electrode plates are transported to the cutting device, the separators and the electrode plates are composited and then cut to form individual composite electrode plates. A plurality of composite electrode plates are then stacked and packaged to form a battery cell. Finally, a specified number of battery cells are packaged to form a battery according to requirements.

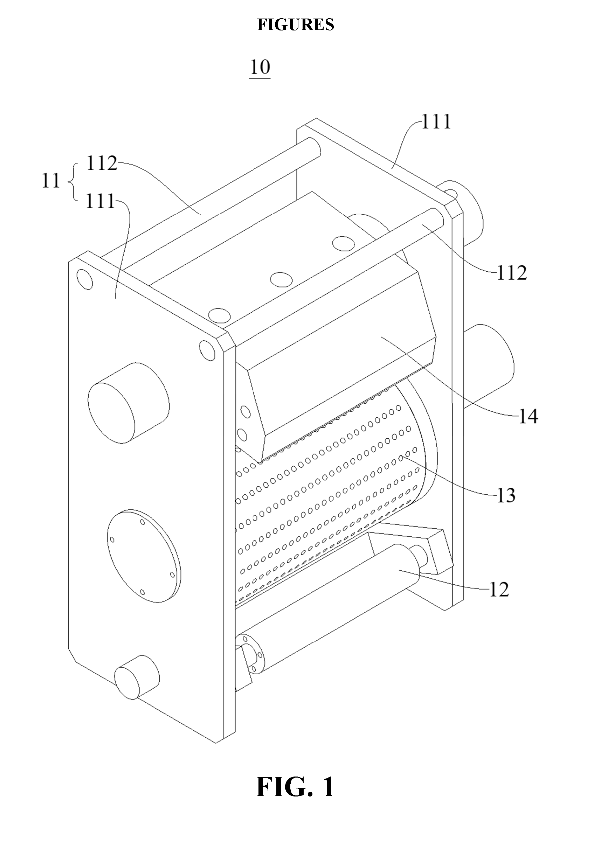

According to some embodiments of the present application, as shown in FIG. 1 to FIG. 4, the embodiments of the present application provide a cutting device 10 for a composite electrode plate 20. The cutting device 10 for a composite electrode plate 20 includes a rack 11, a composite mechanism 12, an adsorption mechanism 13, and a cutting mechanism 14.

As shown in FIG. 1, the composite mechanism 12 is mounted on the rack 11 and is configured to cooperate with the adsorption mechanism 13 to composite a separator and an electrode plate to obtain a composite electrode plate 20.

As shown in FIG. 1, the composite mechanism 12 can fix the separator and the electrode plate through a pressing process to obtain the composite electrode plate 20. The "pressing process" may be, for example, a direct pressing process, a roll pressing process, or the like.

As shown in FIG. 1, the adsorption mechanism 13 is mounted on the rack 11 and is configured to adsorb the composite electrode plate 20.

As shown in FIG. 1, the cutting mechanism 14 is mounted on the rack 11 and is configured to cooperate with the adsorption mechanism 13 to cut off the composite electrode plate 20.

In actual operation, the stacked separator and electrode plate are adsorbed onto the outer surface of the adsorption mechanism 13. The separator and electrode plate are flattened and driven to move by an external device. When the separator and electrode plate move on the adsorption mechanism 13 to a position corresponding to the composite mechanism 12, the composite mechanism 12 moves closer to the adsorption mechanism 13 and squeezes a position corresponding to the separator and electrode plate according to an actual composite requirement of the composite electrode plate 20 to obtain the required composite electrode plate 20. The composite electrode plate 20 moves towards the cutting device 10 under the drive of the external device. When the composite electrode plate 20 moves on the adsorption mechanism 13 to a position corresponding to the cutting mechanism 14, the cutting mechanism 14 moves closer to the adsorption mechanism 13 and cooperates with the adsorption mechanism 13 to cut off the composite electrode plate 20, thereby obtaining a single composite electrode plate 20 of a required length.

By integrating the compositing mechanism 12, the adsorption mechanism 13, and the cutting mechanism 14 onto the same rack 11, the cutting operation may be performed on the composite electrode plate 20 after the composition of the separator and the electrode plate is completed, that is, the cutting device 10 of the composite electrode plate 20 can simultaneously achieve both composite and cutting functions without the need to transfer the composite electrode plate 20, thereby improving the production efficiency. The cutting device 10 has a simple structure, and the integrated composite mechanism 12, adsorption mechanism 13, and cutting mechanism 14 can reduce the number of parts, thereby reducing the overall volume of the cutting device 10 and lowering the production costs.

By integrating the compositing mechanism 12, the adsorption mechanism 13, and the cutting mechanism 14 onto the same rack 11, the cutting device 10 for a composite electrode plate 20 provided according to the embodiment of the present application can simultaneously achieve both composite and cutting functions without the need to transfer the composite electrode plate 20, thereby improving the production efficiency. The cutting device 10 has a simple structure, and the integrated composite mechanism 12, adsorption mechanism 13, and cutting mechanism 14 can reduce the number of parts, thereby reducing the overall volume of the cutting device 10 and lowering the production costs.

In some embodiments, the rack 11 includes two support plates 111 arranged opposite to each other and a support rod 112 connected between the two support plates 111. The composite mechanism 12, the adsorption mechanism 13, and the cutting mechanism 14 are all supported on the support plates 111.

As shown in FIG. 1, the rack 11 may include a support plate 111 and a support rod 112. The support plate 111 may be of a trapezoidal structure, a triangular structure, or a structure in another shape. For example, as shown in FIG. 1, the support plate 111 is a rectangular structure.

As shown in FIG. 1, there may be two support plates 111 and two support rods 112. The two support plates 111 may be arranged parallel to each other and spaced apart in a width direction of the support plates 111. The two support rods 112 are both connected between the two support plates 111, and the two support rods 112 are spaced apart in a length direction of the support plates 111.

The support rods 112 may be connected to an upper end between the two support plates 111, or may be connected to a middle position or another position between the two support plates 111. For example, as shown in FIG. 1, the support rods 112 are connected to the upper end between the two support plates 111.

In other embodiments, the rack 11 may also include other numbers of support plates 111 and support rods 112, or may include support plates 111 in a gate-shaped structure, or be configured in other structures.

The composite mechanism 12 is mounted between the two support plates 111, and the adsorption mechanism 13 and the cutting mechanism 14 are also mounted between the two support plates 111. The composite mechanism 12, the adsorption mechanism 13, and the cutting mechanism 14 are all located below the support rods 112 to reduce the probability that the support rods 112 affect the operations of the composite mechanism 12, the adsorption mechanism 13, and the cutting mechanism 14.

By using the two support plates 111 to support the adsorption mechanism 13, the composite mechanism 12, and the cutting mechanism 14, the stability of the adsorption mechanism 13, the composite mechanism 12, and the cutting mechanism 14 during operation can be improved. The support rods 112 connected between the two support plates 111 can enhance the overall stability of the rack 11, thereby further improving the stability of the adsorption mechanism 13, the composite mechanism 12, and the cutting mechanism 14 during operation.

In some embodiments, as shown in FIG. 1, the composite mechanism 12 and the cutting mechanism 14 are respectively located on two opposite sides of the adsorption mechanism 13.

As shown in FIG. 1, the cutting mechanism 14, the adsorption mechanism 13, and the composite mechanism 12 may be spaced apart sequentially from top to bottom in a height direction of the rack 11, that is, the cutting mechanism 14 and the composite mechanism 12 are located on upper and lower sides of the adsorption mechanism 13, respectively.

In other embodiments, the cutting mechanism 14 and the composite mechanism 12 may also be located on front and rear sides of the adsorption mechanism 13, respectively, or on side portions of the adsorption mechanism 13 in other directions.

In actual operation, one end of each of a first separator 23, a first electrode plate 21, a second separator 24, and a second electrode plate 22 in a length direction enters from the front or rear side of the adsorption mechanism 13 to a position between the adsorption mechanism 13 and the composite mechanism 12, and is adsorbed onto the outer surface of the adsorption mechanism 13. After the composite electrode plate 20 is formed by compositing performed by the composite mechanism 12, the composite electrode plate 20 continues to be moved toward the upper side of the adsorption mechanism 13 and is located between the adsorption mechanism 13 and the cutting mechanism 14. The composite electrode plate 20 is cut by the cutting mechanism 14, and then removed from a direction of entering the cutting device 10.

By setting the composite mechanism 12 and the cutting mechanism 14 to be located on opposite sides of the adsorption mechanism 13, a distance between the composite mechanism 12 and the cutting mechanism 14 may be increased, thereby reducing the probability that the electrode plate and the separator are be cut off by the cutting mechanism 14 before the composite is completed due to the two mechanisms being too close.

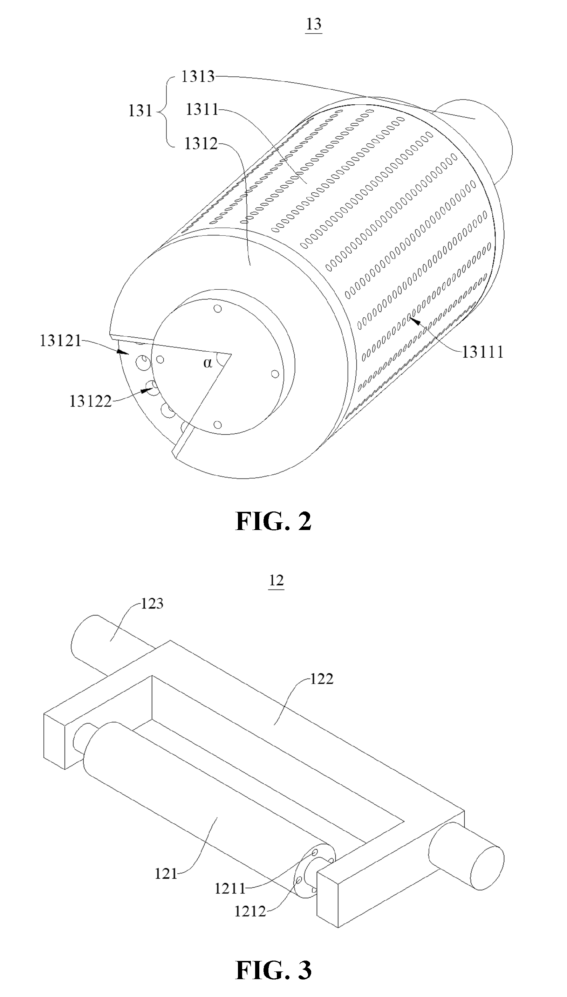

In some embodiments, as shown in FIG. 2, FIG. 2 is a schematic structural diagram of an adsorption mechanism 13 of a cutting device 10 for a composite electrode plate 20 according to some embodiments of the present application. The adsorption mechanism 13 includes a vacuum roller 131, and the vacuum roller 131 is rotatably mounted on a rack 11.

As shown in FIG. 2, two ends of the vacuum roller 131 are rotatably mounted on two support plates 111, respectively. A negative pressure chamber is formed inside the vacuum roller 131. The vacuum roller 131 may be connected to an air pump. By pumping air, the negative pressure chamber of the vacuum roller 131 is put into a negative pressure state, so that a separator and an electrode plate may be adsorbed onto a surface of the vacuum roller 131.

The separator and the electrode plate are adsorbed on the surface of the vacuum roller 131, and the vacuum roller 131 is rotatably mounted on the rack 11; therefore, when the separator and the electrode plate tend to move relative to the surface of the vacuum roller 131 under the push of an external device, the separator and the electrode plate may drive the vacuum roller 131 to rotate together, thereby using the rotation of the vacuum roller 131 to further drive the separator and the electrode plate to rotate around the vacuum roller 131.

An end portion of the vacuum roller 131 may also be connected to an output end of a motor or another driving mechanism. The driving mechanism drives the vacuum roller 131 to rotate, thereby using the rotation of the vacuum roller 131 to drive the separator and the electrode plate to rotate around the vacuum roller 131.

By using the vacuum roller 131 to adsorb the separator and the electrode plate, the structure is simple and the adsorption method is convenient, which can reduce the production cost to a certain extent. At the same time, the vacuum roller 131 is arranged to be rotatably mounted on the rack 11, which facilitates the rotation of the separator and the electrode plate around the vacuum roller 131, reduces the probability that the separator and the electrode plate are difficult to move due to a large friction between the separator and electrode plate and the surface of the vacuum roller 131 during adsorption, and improves the production efficiency.

In some embodiments, as shown in FIG. 2, the vacuum roller 131 includes a first transmission shaft 1313, a sleeve 1311, and a baffle 1312.

As shown in FIG. 2, the first transmission shaft 1313 is rotatably mounted on the rack 11. The two support plates 111 of the rack 11 are provided with first mounting holes at corresponding positions. Two ends of the first transmission shaft 1313 are respectively mounted in the two first mounting holes. A bearing may be arranged between the first transmission shaft 1313 and the first mounting hole to facilitate rotation of the first transmission shaft 1313.

As shown in FIG. 2, the sleeve 1311 is mounted on the first transmission shaft 1313. The sleeve 1311 is mounted in a middle part of the first transmission shaft 1313, and the sleeve 1311 is located between the two support plates 111.

As shown in FIG. 2, the sleeve 1311 forms a negative pressure chamber and has a through hole 13111 in communication with the negative pressure chamber. The interior of the sleeve 1311 is a hollow structure, and an end portion of the sleeve 1311 is open. The baffle 1312 is mounted on the first transmission shaft 1313 and is located at the end portion of the sleeve 1311. An end face of the baffle 1312 facing the sleeve 1311 is fitted with an end face of the sleeve 1311 facing the baffle 1312. That is, the sleeve 1311 and the baffles 1312 at both ends together form the negative pressure chamber.

As shown in FIG. 2, the sleeve 1311 has a plurality of through holes 13111 on its wall surface. Two ends of each of the through holes 13111 are in communication with the external environment and the negative pressure chamber, respectively. The plurality of through holes 13111 may be evenly distributed on the wall surface of the sleeve 1311 in a circumferential direction to improve the capacity of adsorbing the separator and the electrode plate at various positions of the sleeve 1311. The plurality of through holes 13111 may also be unevenly distributed on the wall surface of the sleeve 1311 in the circumferential direction.

In actual execution, the negative pressure chamber formed by the sleeve 1311 and the baffle 1312 is in communication with the air pump. When the cutting device 10 is operating, the air pump draws air from the negative pressure chamber so that the negative pressure chamber is in a negative pressure state. At this time, the negative pressure chamber inhales air from the external environment through the through hole 13111. That is, the separator and the electrode plate may be adsorbed onto the outer surface of the sleeve 1311 by the air intake of the through hole 13111.

By utilizing the sleeve 1311 and the baffle 1312 to form the negative pressure chamber, the structure is simple and has a strong adsorption force, which can improve the stability of the adsorption mechanism 13 in adsorbing the separator and the electrode plate. By utilizing the first transmission shaft 1313 to support the sleeve 1311 and the baffle 1312, stable support can be provided, and the probability of the separator and the electrode plate failing in compositing or cutting due to shaking of the first transmission shaft 1313 during operation can be reduced.

In some embodiments, as shown in FIG. 2, the baffle 1312 is provided with a vacuum-breaking hole 13122 that is respectively in communication with the negative pressure chamber and the external environment.

As shown in FIG. 2, the vacuum-breaking hole 13122 may extend in an axial direction of the first transmission shaft 1313 on the baffle 1312, that is, the vacuum-breaking hole 13122 penetrates the two end faces of the baffle 1312. The vacuum-breaking hole 13122 may also be in a bent shape or of a structure in another shape on the baffle 1312.

Both the vacuum-breaking hole 13122 and the through hole 13111 located in the negative pressure chamber region corresponding to the vacuum-breaking hole 13122 are in communication with the negative pressure chamber, and therefore, when the air pump draws air into the negative pressure chamber, air from the external environment may be simultaneously drawn into the negative pressure chamber through both the vacuum-breaking hole 13122 and the through hole 13111. At this time, the amount of gas drawn into the through hole 13111 located in the negative pressure chamber region corresponding to the vacuum-breaking hole 13122 is less than that drawn into the through holes 13111 in another region. That is, the adsorption force of the through hole 13111 corresponding to the vacuum-breaking hole 13122 is less than the adsorption force of the other through hole 13111.

In actual execution, when the separator and the electrode plate enter the cutting device 10, the separator and the electrode plate are located in a region of the sleeve 1311 that does not correspond to the vacuum-breaking hole 13122, and are adsorbed onto the outer surface of the sleeve 1311 through the air intake of the through hole 13111. After the separator and the electrode plate complete the compositing and cutting operations, when an end portion of the composite electrode plate 20 in the length direction rotates around the sleeve 1311 to the through hole 13111 corresponding to the vacuum-breaking hole 13122, the adsorption force of the through hole 13111 at the location decreases under the action of the vacuum-breaking hole 13122, and it is difficult to stably adsorb the composite electrode plate 20 onto the outer surface of the sleeve 1311. At this point, the end portion of the composite electrode plate 20 separates from the outer surface of the sleeve 1311 under the action of the rebound force and protrudes outward relative to the outer surface of the sleeve 1311. Other positions of the composite electrode plate 20 are also separated from the outer surface of the sleeve 1311 when passing through the region of the sleeve 1311 corresponding to the vacuum-breaking hole 13122. Until the entire composite electrode plate 20 is separated from the outer surface of the sleeve 1311, the composite electrode plate 20 falls into a subsequent device for the next step of operation.

By providing the vacuum-breaking hole 13122 on the baffle 1312, the composite electrode plate 20 may be separated from the sleeve 1311, thereby reducing the need for multiple compositing and cutting of the composite electrode plate 20 due to the composite electrode plate 20 not being separated from the sleeve 1311. The structure is simple and does not require additional components, thereby further reducing the production costs.

In some embodiments, as shown in FIG. 2, one end of the baffle 1312 facing away from the sleeve 1311 is provided with an inwardly recessed groove 13121, and the vacuum-breaking hole 13122 is provided on a bottom wall of the groove 13121.

There may be one or a plurality of vacuum-breaking holes 13122. For example, as shown in FIG. 2, there are a plurality of vacuum-breaking holes 13122, and the plurality of vacuum-breaking holes 13122 are spaced apart in a length direction of the bottom wall of the groove 13121.

In some other embodiments, the baffle 1312 is not provided with a groove 13121, and the vacuum-breaking hole 13122 can penetrate through both ends of the baffle 1312 in the axial direction. The negative pressure chamber of the sleeve 1311 is in communication with the external environment through the vacuum-breaking hole 13122.

In some other embodiments, the baffle 1312 may be provided with a notch, and the negative pressure chamber of the sleeve 1311 and a region corresponding to the notch are directly in communication with the external environment through the notch.

By providing the vacuum-breaking hole 13122 on the bottom wall of the groove 13121, compared to providing the notch on the baffle 1312, an area of the negative pressure chamber of the sleeve 1311 in communication with the external environment may be reduced, thereby reducing the probability that the large vacuum-breaking area affects the adsorption force of other positions in the negative pressure chamber. Compared to providing the vacuum-breaking hole 13122 penetrating through both ends of the baffle 1312 on the baffle 1312, an axial length of the vacuum-breaking hole 13122 can be shortened, that is, a length of an air passage can be shortened, thereby reducing noise generated by the vacuum-breaking hole 13122 during air pumping of the air pump.

In some embodiments, as shown in FIG. 2, an angle α of a region where the vacuum-breaking hole 13122 is in communication with the negative pressure chamber in a circumferential direction meets: 30° ≤ α ≤ 80°.

The baffle 1312 may be of a rectangular structure, a triangular structure, or a structure in another shape. For example, as shown in FIG. 2, the baffle 1312 is of a ring structure. The baffle 1312 is mounted on the first transmission shaft 1313 through an internal hole. An outer diameter of the baffle 1312 may be the same as an outer diameter of the sleeve 1311 or larger than the outer diameter of the sleeve 1311.

As shown in FIG. 2, the groove 13121 extends in the circumferential direction of the baffle 1312. That is, the groove 13121 is of an arc-shaped structure, and a center of curvature of the groove 13121 may coincide with a center of the baffle 1312 or not coincide with the center of the baffle 1312.

The vacuum-breaking hole 13122 may be an arc-shaped elongated hole or a round hole. For example, as shown in FIG. 2, the vacuum-breaking hole 13122 is a round hole. A plurality of vacuum-breaking holes 13122 are evenly distributed in the circumferential direction on the bottom wall of the groove 13121. That is, the plurality of vacuum-breaking holes 13122 form an arc-shaped structure. The center of curvature of the arc-shaped structure formed by the plurality of vacuum-breaking holes 13122 may coincide with the center of the baffle 1312 or not coincide with the center of the baffle 1312. An included angle between two outermost vacuum-breaking holes 13122 in the circumferential direction is α. That is, the negative pressure chamber region in communication with the vacuum-breaking hole 13122 has an angle α in the circumferential direction.

As shown in FIG. 2, a value range of α is [30°, 80°]. The specific value of α may be 30°, 45°, 50°, 55°, 60°, 70°, 80° or other values between 30° and 80°, without being specifically limited here.

By setting the angle α of the region where the vacuum-breaking hole 13122 is in communication with the negative pressure chamber in the circumferential direction to meet 30°≤α≤80°, the probability of poor adsorption effect on the electrode plate and the separator due to the excessively large vacuum-breaking area may be reduced. At the same time, the probability of the electrode plate and the separator being difficult to separate from the sleeve 1311 due to the excessively small vacuum-breaking area may be reduced.

In some embodiments, as shown in FIG. 2, the sleeve 1311 is rotatably connected to the baffle 1312.

The first transmission shaft 1313 is rotatably connected to the baffle 1312. The baffle 1312 is sleeved on an outer periphery of the first transmission shaft 1313, and a bearing may be arranged between the baffle 1312 and the first transmission shaft 1313. Since the sleeve 1311 is mounted on the first transmission shaft 1313, the sleeve 1311 is rotatably connected to the baffle 1312.

In actual execution, after the end portions of the electrode plate and the separator pass through the composite mechanism 12 and the cutting mechanism 14, they continue to rotate together with the sleeve 1311. When the end portion of the composite electrode plate 20 rotates to the position corresponding to the vacuum-breaking hole 13122, the end portion of the composite electrode plate 20 is separated from the sleeve 1311, and other parts of the composite electrode plate 20 are gradually separated from the sleeve 1311 at the position corresponding to the vacuum-breaking hole 13122 until the entire composite electrode plate 20 is separated from the sleeve 1311. The sleeve 1311 is rotatably connected to the baffle 1312, and therefore, when the sleeve 1311 rotates, the baffle 1312 remains stationary, so all positions on the composite electrode plate 20 are separated from the sleeve 1311 at the same position on the baffle 1312.

In other embodiments, the sleeve 1311 and the baffle 1312 may also be fixedly connected. A rotation speed of the composite electrode plate 20 may be set to be greater than or less than a rotation speed of the sleeve 1311. The composite electrode plate 20 corresponding to the vacuum-breaking region of the sleeve 1311 may be achieved by a rotation speed difference between the composite electrode plate 20 and the sleeve 1311.

By arranging the sleeve 1311 to be rotatably connected to the baffle 1312, the various positions of the composite electrode plate 20 may be separated from the sleeve 1311 at the fixed position of the cutting device 10, so as to facilitate position setting of a subsequent device.

In some embodiments, as shown in FIG. 3, the composite mechanism 12 includes a thermal lamination roller 121 and a first driving mechanism.

As shown in FIG. 3, the thermal lamination roller 121 is pivotally mounted on the rack 11. The interior of the thermal lamination roller 121 may be provided with a heating rod 1211 and a first temperature sensor 1212. The heating rod 1211 is configured to heat the thermal lamination roller 121, and the first temperature sensor 1212 is configured to collect a temperature of the thermal lamination roller 121 and control a heating power of the heating rod 1211 according to the collected temperature. For example, if the temperature of the thermal lamination roller 121 is low, the heating power of the heating rod 1211 is controlled to be increased; if the temperature of the thermal lamination roller 121 is high, the heating power of the heating rod 1211 is controlled to be decreased.

The temperature of the thermal lamination roller 121 after heating may be between 65°C and 125°C. The specific temperature of the thermal lamination roller 121 may be 65°C, 75°C, 80°C, 90°C, 100°C, 110°C, 125°C, or other values between 65°C and 125°C, without being specifically limited here.

By setting the temperature of the thermal lamination roller 121 between 65°C and 125°C, the probability of damage caused by excessive melting of the separator and the electrode plate due to an excessively high temperature of the thermal lamination roller 121 may be reduced, and the probability of poor compositing effect caused by an excessively low temperature of the thermal lamination roller 121 may also be reduced.

When the thermal lamination roller 121 composites the electrode plate 20 and the separator, the thermal lamination roller 121 melts the separator at a certain temperature and composites the separator and the electrode plate at a certain pressure. The pressure applied by the thermal lamination roller 121 to the separator and the electrode plate may be between 0.25 MPa and 0.8 MPa, and the specific value may be 0.25 MPa, 0.3 MPa, 0.4 MPa, 0.5 MPa, 0.6 MPa, 0.7 MPa, 0.8 MPa, or other values between 0.25 MPa and 0.8 MPa, without being specifically limited here.

By setting the pressure applied by the thermal lamination roller 121 to the separator and the electrode plate between 0.25MPa and 0.8MPa, the probability of damage to the adsorption mechanism 13 due to an excessively high pressure applied by the thermal lamination roller 121 may be reduced, and the probability of poor compositing effect caused by an excessively low pressure applied by the thermal lamination roller 121 may also be reduced.

The first driving mechanism is configured to drive the thermal lamination roller 121 to move toward the adsorption mechanism 13. The first driving mechanism may be a motor or a cylinder plus a ball screw mechanism, or another driving mechanism.

In actual execution, when the electrode plate and the separator are adsorbed onto the adsorption mechanism 13, and the electrode plate and the separator are rotated to the position corresponding to the thermal lamination roller 121, the first driving mechanism drives the thermal lamination roller 121 to move toward the adsorption mechanism 13 so that the thermal lamination roller 121 contacts with the adsorption mechanism 13, and a certain force is generated when they contact with each other. Therefore, when the separator and the electrode plate are located between the thermal lamination roller 121 and the adsorption mechanism 13, the thermal lamination roller 121 composites the separator and the electrode plate at a certain temperature and a certain pressure. Since the thermal lamination roller 121 is pivotally mounted on the rack 11, a contact position between the thermal lamination roller 121 and the sleeve 1311 may be maintained in a fixed position of the cutting device 10. After the electrode plate and the separator are composited, the first driving mechanism drives the thermal lamination roller 121 to move away from the adsorption mechanism 13 so that the composite electrode plate 20 can continue to rotate on the adsorption mechanism 13.

By arranging the thermal lamination roller 121 and the first driving mechanism, the electrode plate 20 and the separator are composited by heating lamination, which can improve the composite efficiency and compositing effect of the electrode plate and the separator. By using the first driving mechanism to drive the thermal lamination roller 121 to move toward the adsorption mechanism 13 or away from the adsorption mechanism 13, the compositing effect of the thermal lamination roller 121 on the electrode plate and the separator can be improved, while reducing the probability that the thermal lamination roller 121 affects the rotation of the composite electrode plate 20.

In some embodiments, as shown in FIG. 3, the composite mechanism 12 further includes a support 122. The support 122 is pivotally mounted on the rack 11, the thermal lamination roller 121 is rotatably mounted on the support 122, with a pivot axis of the support 122 parallel to and spaced apart from a rotation axis of the thermal lamination roller 121, and the first driving mechanism is connected to the support 122 and configured to drive the support 122 to rotate.

The support 122 may be of a rectangular structure, a trapezoidal structure, or a structure in another shape. For example, as shown in FIG. 3, the support 122 may be of a C-shaped structure, and the thermal lamination roller 121 is mounted inside the support 122.

As shown in FIG. 3, the composite mechanism 12 may also include a third transmission shaft 123. The third transmission shaft 123 is rotatably connected to the rack 11, and the third transmission shaft 123 is arranged parallel to the thermal lamination roller 121. A bearing may be arranged between the third transmission shaft 123 and the rack 11. The support 122 is mounted on the third transmission shaft 123, and the third transmission shaft 123 is connected to an output end of the first driving mechanism.

In actual execution, the first driving mechanism drives the third transmission shaft 123 to rotate, the third transmission shaft 123 drives the support 122 and the thermal lamination roller 121 to rotate around the third transmission shaft 123 as a whole, and the thermal lamination roller 121 can rotate around its own axis on the support 122.

By setting the pivot axis of the support 122 and the rotation axis of the thermal lamination roller 121 to be parallel to and spaced apart, the thermal lamination roller 121 can move toward the adsorption mechanism 13 or away from the adsorption mechanism 13. The structure is simple and the operation is convenient.

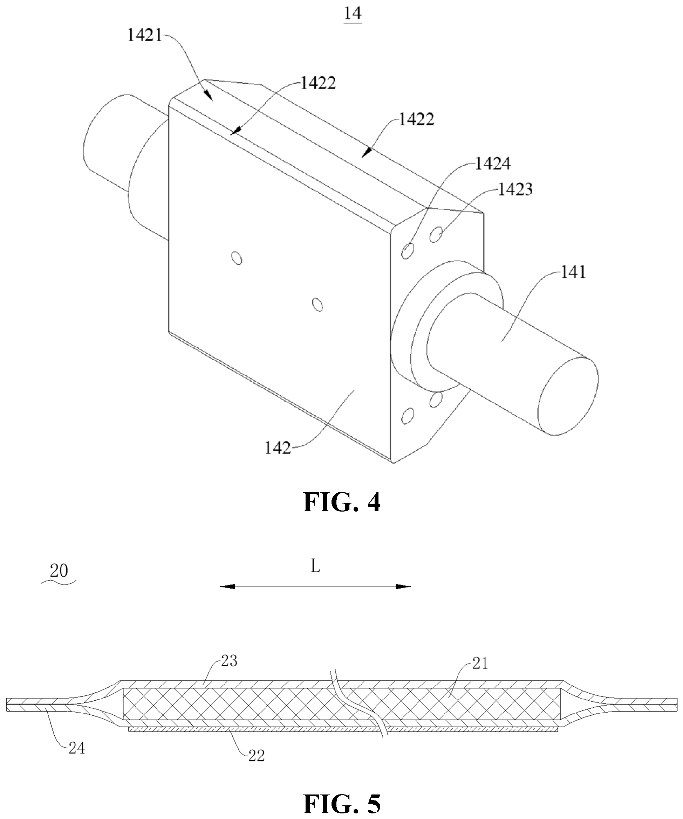

In some embodiments, as shown in FIG. 4, the cutting mechanism 14 includes a second transmission shaft 141, a cutter blade 142, and a second driving mechanism.

As shown in FIG. 4, the second transmission shaft 141 is rotatably mounted on the rack 11, and a bearing may be arranged between the second transmission shaft 141 and the rack 11 to facilitate rotation of the second transmission shaft 141.

As shown in FIG. 4, the cutter blade 142 is mounted on the second transmission shaft 141, and the cutter blade 142 may rotate, together with the second transmission shaft 141, around an axis of the second transmission shaft 141.

The second driving mechanism is connected to the second transmission shaft 141, and is configured to drive the second transmission shaft 141 to rotate. The second driving mechanism may be a motor or a cylinder plus a ball screw mechanism, or another driving mechanism.

In actual execution, when the portion of the composite electrode plate 20 that needs to be cut rotates to a position corresponding to the cutting mechanism 14, the second driving mechanism drives the second transmission shaft 141 to rotate. The second transmission shaft 141 drives the cutter blade 142 to rotate toward the adsorption mechanism 13, and the composite electrode plate 20 is cut by using a blade part of the cutter blade 142. After the cutter blade 142 cuts the composite electrode plate 20, the second driving mechanism drives the second transmission shaft 141 to rotate. The second transmission shaft 141 drives the cutter blade 142 to rotate away from the adsorption mechanism 13, so that the composite electrode plate 20 can continue to rotate on the adsorption mechanism 13.

By arranging the cutter blade 142 and the second driving mechanism, the cutter blade 142 is driven by the second driving mechanism to move toward the adsorption mechanism 13 or away from the adsorption mechanism 13. This can improve the cutting effect of the cutter blade 142 on the composite electrode plate 20 while reducing the probability that the cutter blade 142 affects the rotation of the composite electrode plate 20.

In some embodiments, as shown in FIG. 4, the cutter blade 142 has a working surface 1421 and clearance surfaces 1422 located on both sides of the working surface 1421. When the cutter blade 142 moves to abut against the composite electrode plate 20 on the composite mechanism 12, the working surface 1421 presses the composite electrode plate 20 tightly.

As shown in FIG. 4, both the working surface 1421 and the clearance surface 1422 may be planes. The clearance surfaces 1422 located on both sides of the working surface 1421 are inclined relative to the working surface 1421 toward the second transmission shaft 141. That is, a height between the clearance surface 1422 and the adsorption mechanism 13 is greater than a height between the working surface 1421 and the adsorption mechanism 13.

In actual execution, when the second driving mechanism drives the second transmission shaft 141 to drive the cutter blade 142 to rotate toward the adsorption mechanism 13, the first clearance surface 1422 first passes over the adsorption mechanism 13. The clearance surface 1422 is higher than the working surface 1421, and the clearance surface 1422 is inclined toward the second transmission shaft 141; therefore, the clearance surface 1422 comes into contact with the adsorption mechanism 13. After the first clearance surface 1422 passes the adsorption mechanism 13, the working surface 1421 comes into contact with the adsorption mechanism 13. The sleeve 1311 of the adsorption mechanism 13 is cylindrical and the working surface 1421 is planar, and therefore, when the working surface 1421 comes into contact with the composite electrode plate 20 adsorbed on the sleeve 1311, a contact region between the working surface 1421 and the composite electrode plate 20 is a straight line. When the working surface 1421 and the adsorption mechanism 13 come into contact, a certain force is generated. Therefore, when the composite electrode plate 20 is located between the cutter blade 142 and the adsorption mechanism 13, the working surface 1421 applies a certain pressure to the composite electrode plate 20 so that the composite electrode plate 20 is squeezed and broken. When the second driving mechanism drives the second transmission shaft 141 to drive the cutter blade 142 to continue to rotate in the rotation direction before cutting, the working surface 1421 and the second clearance surface 1422 pass through the adsorption mechanism 13 in sequence, and the second clearance surface 1422 also does not come into contact with the adsorption mechanism 13.

By setting the working surface 1421 and the clearance surfaces 1422, the probability of damage to the cutter blade 142 and the adsorption mechanism 13 caused by the contact between parts of the cutter blade 142 located on both sides of the working surface 1421 and the adsorption mechanism 13 may be reduced while cutting the composite electrode plate 20.

In some embodiments, as shown in FIG. 4, the cutting mechanism 14 further includes a heater 1423, and the heater 1423 is mounted inside the cutter blade 142.

As shown in FIG. 4, the cutter blade 142 may be provided with the heater 1423 and a second temperature sensor 1424. The heater 1423 is configured to heat the cutter blade 142, and the second temperature sensor 1424 is configured to collect the temperature of the cutter blade 142 and control a heating power of the heater 1423 according to the collected temperature. For example, if the temperature of the cutter blade 142 is low, the heating power of the heater 1423 is controlled to be increased; if the temperature of the cutter blade 142 is high, the heating power of the heater 1423 is controlled to be decreased.

The temperature of the cutter blade 142 after heating may be between 65°C and 125°C. The specific temperature of the cutter blade 142 may be 65°C, 75°C, 80°C, 90°C, 100°C, 110°C, 125°C, or other values between 65°C and 125°C, without being specifically limited here.

By setting the temperature of the cutter blade 142 between 65°C and 125°C, the probability of damage caused by excessive melting of the composite electrode plate 20 due to an excessively high temperature of the cutter blade 142 may be reduced, and the probability of poor cutting effect caused by an excessively low temperature of the cutter blade 142 may also be reduced.

When the cutter blade 142 cuts the composite electrode plate 20, the cutter blade 142 melts the composite electrode plate 20 at a certain temperature and cuts the composite electrode plate 20 at a certain pressure. The pressure applied by the cutter blade 142 to the composite electrode plate 20 may be between 0.25 MPa and 0.8 MPa, and the specific value may be 0.25 MPa, 0.3 MPa, 0.4 MPa, 0.5 MPa, 0.6 MPa, 0.7 MPa, 0.8 MPa, or other values between 0.25 MPa and 0.8 MPa, without being specifically limited here.

By setting the pressure applied by the cutter blade 142 to the composite electrode plate 20 between 0.25MPa and 0.8MPa, the probability of damage to the adsorption mechanism 13 due to an excessively high pressure applied by the cutter blade 142 may be reduced, and the probability of poor cutting effect caused by an excessively low pressure applied by the cutter blade 142 may also be reduced.

In actual execution, when the cutter blade 142 cuts the composite electrode plate 20, the high temperature of the cutter blade 142 melts the part of the composite electrode plate 20 that needs to be cut, and then the cutter blade 142 applies a certain pressure to the composite electrode plate 20 to squeeze and cut the part of the composite electrode plate 20 that needs to be cut.

By arranging the heater 1423, when the cutter blade 142 cuts the composite electrode plate 20, the part of the composite electrode plate 20 that needs to be cut is melted, thus facilitating the cutter blade 142 to cut off the composite electrode plate 20, and reducing the pressure that needs to be applied to the composite electrode plate 20 by the cutter blade 142.

According to some embodiments of the present application, as shown in FIG. 1 to FIG. 4, the present application provides a cutting device 10 for a composite electrode plate 20, including a rack 11, a composite mechanism 12, an adsorption mechanism 13, and a cutting mechanism 14. The composite mechanism 12 is mounted on the rack 11 and configured to cooperate with the adsorption mechanism 13 to composite a separator and an electrode plate to obtain a composite electrode plate 20. The adsorption mechanism 13 is mounted on the rack 11 and configured to adsorb the composite electrode plate 20. The cutting mechanism 14 is mounted on the rack 11 and configured to cooperate with the adsorption mechanism 13 to cut off the composite electrode plate 20. The composite mechanism 12 and the cutting mechanism 14 are respectively located on two opposite sides of the adsorption mechanism 13. The adsorption mechanism 13 includes a vacuum roller 131, and the vacuum roller 131 is rotatably mounted on the rack 11. The vacuum roller 131 includes a first transmission shaft 1313, a sleeve 1311, and a baffle 1312. The first transmission shaft 1313 is rotatably mounted on the rack 11. The sleeve 1311 is mounted on the first transmission shaft 1313, and the sleeve 1311 forms a negative pressure chamber and is provided with a through hole 13111 in communication with the negative pressure chamber. The baffle 1312 is mounted on the first transmission shaft 1313 and is located at an end portion of the sleeve 1311. The baffle 1312 is provided with a vacuum-breaking hole 13122 in communication with the negative pressure chamber and the external environment respectively. One end of the baffle 1312 facing away from the sleeve 1311 is provided with an inwardly recessed groove 13121, the vacuum-breaking hole 13122 is provided on a bottom wall of the groove 13121, and the sleeve 1311 is rotatably connected to the baffle 1312. The composite mechanism 12 includes a thermal lamination roller 121, a first driving mechanism, and a support 122. The thermal lamination roller 121 is pivotally mounted on the rack 11. The first driving mechanism is configured to drive the thermal lamination roller 121 to move toward the adsorption mechanism 13. The support 122 is pivotally mounted on the rack 11, the thermal lamination roller 121 is rotatably mounted on the support 122, with a pivot axis of the support 122 parallel to and spaced apart from a rotation axis of the thermal lamination roller 121, and the first driving mechanism is connected to the support 122 and configured to drive the support 122 to rotate. The cutting mechanism 14 includes a second transmission shaft 141, a cutter blade 142, a second driving mechanism, and a heater 1423. The second transmission shaft 141 is rotatably mounted on the rack 11. The cutter blade 142 is mounted on the second transmission shaft 141. The second driving mechanism is connected to the second transmission shaft 141 and is configured to drive the second transmission shaft 141 to rotate. The heater 1423, the heater 1423 is mounted inside the cutter blade 142. The cutter blade 142 has a working surface 1421 and clearance surfaces 1422 located on both sides of the working surface 1421. When the cutter blade 142 moves to abut against the composite electrode plate 20 on the composite mechanism 12, the working surface 1421 presses the composite electrode plate 20 tightly.

An angle α of a region where the vacuum-breaking hole 13122 is in communication with the negative pressure chamber in a circumferential direction meets: 30° ≤ α ≤ 80°.

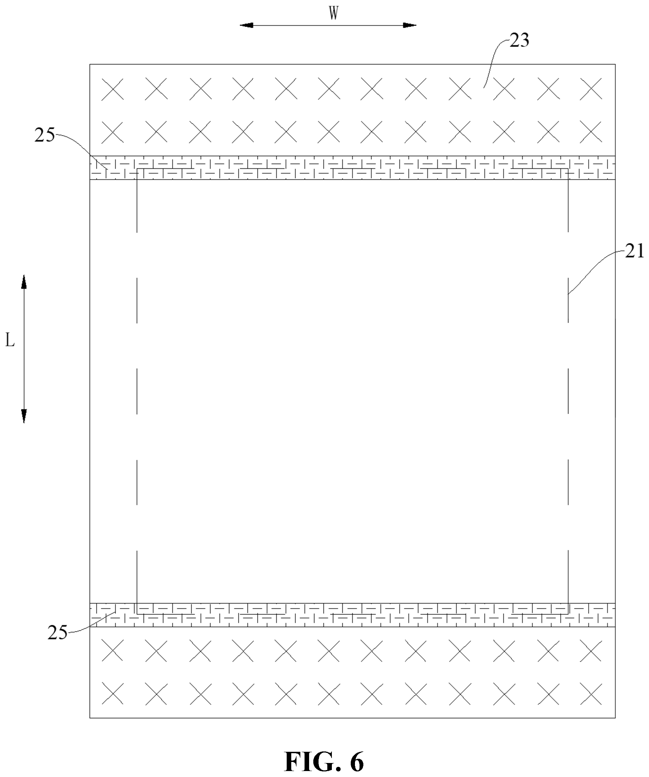

It should be noted that, as shown in FIG. 5 and FIG. 6, the composite electrode plate 20 may include a first electrode plate 21, a second electrode plate 22, a first separator 23, and a second separator 24. The first separator 23, the first electrode plate 21, the second separator 24, and the second electrode plate 22 are stacked in sequence and adsorbed onto the adsorption mechanism 13. The second electrode plate 22 and the first electrode plate 21 have opposite polarities. When the first electrode plate 21, the second electrode plate 22, the first separator 23, and the second separator 24 are all in an unfolded state, lengths of the first separator 23 and the second separator 24 are greater than lengths of the first electrode plate 21 and the second electrode plate 22. That is, end portions of the first separator 23 and the second separator 24 in a length direction L of the electrode plates protrude outward relative to the electrode plates.

In some embodiments, the composite mechanism 12 composites the two end portions of the first separator 23 and the second separator 24 in the length direction L in one-to-one correspondence.

In actual execution, the first separator 23, the first electrode plate 21, the second separator 24, and the second electrode plate 22 are stacked in sequence and adsorbed onto the adsorption mechanism 13. When first ends of the first separator 23 and the second separator 24 in the length direction L pass through the composite mechanism 12, the composite mechanism 12 may use a method such as cold roll lamination or knurling lamination to composite the first ends of the first separator 23 and the second separator 24 in the length direction L. When second ends of the first separator 23 and the second separator 24 in the length direction L pass through the composite mechanism 12, the composite mechanism 12 may use methods such as cold roll lamination or knurling lamination to composite the second ends of the first separator 23 and the second separator 24 in the length direction L. This ensures that the first electrode plate 21 does not exceed an edge of the first separator 23 or the second separator 24 in the length direction L, thereby improving the yield of the composite electrode plate 20.

In other embodiments, as shown in FIG. 5 and FIG. 6, the composite mechanism 12 composites the two end portions of the first separator 23 and the second separator 24 in the length direction L in one-to-one correspondence, and an end portion of the first electrode plate 21 in the length direction L may be composited and fixed with at least one of the first separator 23 and the second separator 24 to form a sealing edge 25.

In actual execution, the first separator 23, the first electrode plate 21, the second separator 24, and the second electrode plate 22 are stacked in sequence and adsorbed onto the adsorption mechanism 13. When the end portions of the first separator 23 and the second separator 24 in the length direction L pass through the composite mechanism 12, the composite mechanism 12 may composite the end portions of the first separator 23 and the second separator 24 in the length direction L. When an end portion of the first electrode plate 21 in the length direction L passes through the composite mechanism 12, the composite mechanism 12 may composite and fix the end portion of the first electrode plate 21 in the length direction L with at least one of the first separator 23 and the second separator 24 to form the sealing edge 25. This reduces the size of burrs on the first electrode plate 21 that protrude from the surface of the electrode plate when the longitudinal ends of the first electrode plate 21 are fixed, or covers these burrs, thereby reducing the risk of the burrs piercing the separator. Additionally, it prevents the first electrode plate 21 from slipping relative to the first separator 23 or the second separator 24.

The present application further discloses a battery production line, including a conveying device and a cutting device 10 for a composite electrode plate.

The conveying device is configured to transport an electrode plate and a separator to the cutting device 10 for a composite electrode plate. The cutting device 10 for a composite electrode plate is the cutting device 10 for a composite electrode plate described in any of the above embodiments.

The battery production line in the present application, by designing the cutting device 10 in the above structure form, simultaneously achieves both composite and cutting functions without the need to transfer the composite electrode plate, thereby improving production efficiency. The cutting device has a simple structure, and an integrated composite mechanism 12, adsorption mechanism 13, and cutting mechanism 14 can reduce the number of parts, thereby reducing the overall volume of the cutting device 10 and lowering the production costs.

The battery production line may further include other mechanisms, such as a stacking mechanism configured to stack composite electrode plates and a packaging mechanism configured to encapsulate the battery.

It should be noted that, without conflict, embodiments in the present application and features in the embodiments may be in combination together.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A cutting device for a composite electrode plate, comprising:
a rack;
a composite mechanism mounted on the rack and configured to cooperate with an adsorption mechanism to composite a separator and an electrode plate to obtain a composite electrode plate;
the adsorption mechanism mounted on the rack and configured to adsorb the composite electrode plate; and
a cutting mechanism mounted on the rack and configured to cooperate with the adsorption mechanism to cut off the composite electrode plate.

2. The cutting device for a composite electrode plate according to claim 1, wherein the composite mechanism and the cutting mechanism are respectively located on two opposite sides of the adsorption mechanism.

3. The cutting device for a composite electrode plate according to claim 1 or 2, wherein the adsorption mechanism comprises:
a vacuum roller, the vacuum roller being rotatably mounted on the rack.

4. The cutting device for a composite electrode plate according to claim 3, wherein the vacuum roller comprises:
a first transmission shaft, the first transmission shaft being rotatably mounted on the rack;
a sleeve, the sleeve being mounted on the first transmission shaft, and the sleeve forming a negative pressure chamber and being provided with a through hole in communication with the negative pressure chamber; and
a baffle, the baffle being mounted on the first transmission shaft and located at an end portion of the sleeve.

5. The cutting device for a composite electrode plate according to claim 4, wherein the baffle is provided with a vacuum-breaking hole that is respectively in communication with the negative pressure chamber and the external environment.

6. The cutting device for a composite electrode plate according to claim 5, wherein one end of the baffle facing away from the sleeve is provided with an inwardly recessed groove, and the vacuum-breaking hole is provided on a bottom wall of the groove.

7. The cutting device for a composite electrode plate according to claim 5 or 6, wherein an angle α of a region where the vacuum-breaking hole is in communication with the negative pressure chamber in a circumferential direction meets: 30°≤α≤80°.

8. The cutting device for a composite electrode plate according to any one of claims 4 to 7, wherein the sleeve is rotatably connected to the baffle.

9. The cutting device for a composite electrode plate according to any one of claims 1 to 8, wherein the composite mechanism comprises:
a thermal lamination roller, the thermal lamination roller being pivotally mounted on the rack; and
a first driving mechanism, the first driving mechanism being configured to drive the thermal lamination roller to move toward the adsorption mechanism.

10. The cutting device for a composite electrode plate according to claim 9, wherein the composite mechanism further comprises:
a support, the support being pivotally mounted on the rack, the thermal lamination roller being rotatably mounted on the support, with a pivot axis of the support parallel to and spaced apart from a rotation axis of the thermal lamination roller, and the first driving mechanism being connected to the support and configured to drive the support to rotate.

11. The cutting device for a composite electrode plate according to any one of claims 1 to 10, wherein the cutting mechanism comprises:
a second transmission shaft, the second transmission shaft being rotatably mounted on the rack;
a cutter blade, the cutter blade being mounted on the second transmission shaft; and
a second driving mechanism, the second driving mechanism being connected to the second transmission shaft and configured to drive the second transmission shaft to rotate.

12. The cutting device for a composite electrode plate according to claim 11, further comprising:
a heater, the heater being mounted in the cutter blade.

13. The cutting device for a composite electrode plate according to claim 11 or 12, wherein the cutter blade has a working surface and clearance surfaces located on both sides of the working surface, and when the cutter blade moves to abut against the composite electrode plate on the composite mechanism, the working surface presses the composite electrode plate tightly.

14. The cutting device for a composite electrode plate according to any one of claims 1 to 13, wherein the rack comprises two support plates arranged opposite to each other and a support rod connected between the two support plates, and the composite mechanism, the adsorption mechanism, and the cutting mechanism are all supported on the support plates.

15. A battery production line, comprising:
the cutting device for a composite electrode plate according to any one of claims 1 to 14; and
a conveying device, the conveying device being configured to transport an electrode plate and a separator to the cutting device.
